# EUROPÄISCHE PATENTSCHRIFT

(11) **EP 1 042 769 B1**
(45) Veröffentlichungstag und Bekanntmachung des Hinweises auf die Patenterteilung: **02.01.2002**
(21) Anmeldenummer: 98966810.8
(22) Anmeldetag: 22.12.1998
(51) Int. Cl.: H01G 4/255

(54) **DIGITAL ABSTIMMBARE, ELEKTRONISCHE KAPAZITÄT**
DIGITALLY ADJUSTABLE ELECTRONIC CAPACITOR
CONDENSATEUR ELECTRONIQUE ACCORDABLE NUMERIQUEMENT

(30) Priorität: 22.12.1997 DE 19758345
(43) Veröffentlichungstag der Anmeldung: 11.10.2000
(73) Patentinhaber: Institut Für Halbleiterphysik Frankfurt (Oder) GmbH, 15236 Frankfurt (Oder) (DE)
(72) Erfinder: MEHR, Wolfgang, D-15754 Friedersdorf (DE)
(74) Vertreter: Eisenführ, Speiser & Partner
(86) Internationale Anmeldenummer: DE9803797
(87) Internationale Veröffentlichungsnummer: WO9933075

(56) Entgegenhaltungen:
- DE-A- 3 148 968

## Beschreibung

Die Erfindung bezieht sich auf eine digital abstimmbare, elektronische Kapazität.

In vielen Bereichen der Elektronik und der Mikroelektronik werden insbesondere für analoge Anwendungsbereiche variable bzw. durchstimmbare Kapazitäten sowohl als diskrete als auch in Schaltkreise integrierte Bauelemente benötigt. Diese werden z.B. in abstimmbaren Filtern, Schwingkreisen und Anpaßgliedern eingesetzt. Üblicherweise kommen abstimmbare Kapazitäten als diskrete Bauelemente in Form von Drehkondensatoren oder als integrierte Bauelemente in Form von spannungsgesteuerten pn-Übergängen oder MIS-Anordnungen zur Anwendung. Die Ansteuerung erfolgt in beiden Fällen in analoger Form. Beim Drehkondensator bestimmt der Drehwinkel die Größe der Kapazität, während bei pn-Übergängen und MIS-Anordnungen die angelegte Spannung den Wert der Kapazität beeinflußt. Der Drehkondensator ist ein mechanisch abstimmbares Bauelement auf der Basis von mindestens zwei sich gegeneinander bewegender Elektroden. Drehkondensatoren haben den Nachteil, daß sie unter Nutzung der üblichen mikroelektronischen Schaltkreistechnologien nicht integrierbar sind und einen relativ großen Raumbedarf besitzen. Kapazitäten auf der Basis von pn-Übergängen oder MIS-Anordnungen werden mit üblichen mikroelektronischen Technologien hergestellt und bieten gegenüber Drehkondensatoren den Vorteil, daß sie integrierbar sind. Allerdings ist es notwendig, daß das eigentliche kapazitätsbildende Element, der pn-Übergang bzw. die MIS-Anordnung, innerhalb eines monolithischen Kristalls, d. h. direkt im bzw. bei MIS-Strukturen auf dem aktiven Gebiet des Schaltkreises erzeugt wird. Damit verbunden ist, insbesondere bei hohen Kapazitätswerten, ein aus Kostengründen nicht sinnvoller Verbrauch von aktiver Halbleiteroberfläche. Ein weiterer Nachteil ist der im Vergleich zu metallischen Leitbahnen hohe Widerstand von dotierten Halbleiterelektroden und die damit verbundene geringe Güte von pn- und MIS-Kapazitäten. Die Abstimmbarkeit ist abhängig von dem zur Verfügung stehenden Spannungsbereich, der bei modernen Schaltkreistechnologien stark eingeschränkt ist und beispielsweise zwischen 0 V und 3,3 V liegt. Aufgrund fortlaufender Skalierung und verstärkter Anwendung von leistungsarmen Technologien kommt es auch in Zukunft zur weiteren Reduzierung des zur Verfügung stehenden Spannungsbereichs. Damit ist der Variationsbereich der Kapazität äuf der Basis von pn-Übergängen prinzipiell beschränkt bzw. wird mit fortschreitender Entwicklung immer stärker reduziert. Weiterhin sind die Verlustströme zwischen den Elektroden des pn-Übergangs relativ hoch, da während des Betriebes Sperrströme fließen. Diese sind prinzipiell nicht zu beseitigen.
Die DE 31 48 968 A1 beschreibt einen Kondensator mit veränderbarer Kapazität. Dieser umfaßt eine Vielzahl von kapazitiven Elementen, die auf der Oberfläche eines Substrates mittels einer Vielzahl von leitenden Schichten, einer isolierenden Schicht, die die leitenden Schichten überdeckt, und einer gemeinsamen leitenden Schicht ausgebildet sind. Mittels Schaltelementen läßt sich die gewünschte Kapazität zwischen einem oder mehreren der kapazitiven Elemente und der gemeinsamen leitenden Schicht realisieren.

Aufgabe der Erfindung ist es, eine digital abstimmbare, elektronische Kapazität vorzuschlagen, die digital ansteuerbar, in einem großen Kapazitätsbereich über mehrere Größenordnungen unabhängig von der zur Verfügung stehenden Spannung durchstimmbar ist, die sowohl als diskretes Bauelement herstellbar, als auch in Schaltkreise integrierbar ist und kostengünstig hergestellt werden kann, ohne daß dabei die Verwendung monolithischer Halbleiterkristalle notwendig ist.

Diese Aufgabenstellung wird durch die Merkmale des Anspruchs 1 gelöst.
Eine digital abstimmbare, elektronische Kapazität besteht aus einem Träger und voneinander isolierten und um einen bestimmten Winkel, vorzugsweise 90° gegeneinander gedrehten Leitbahnebenen, die innerhalb einer Ebene zueinander isolierte leitfähige Bahnen mit gleichen oder unterschiedlichen Abständen, Längen und Breiten aufweisen. Die Form der Leitbahnen können auch die Gestalt von geometrischen Figuren, insbesondere Rechtecken oder Dreiecken besitzen. Entscheidend ist, daß die Leitbahnen so angeordnet sind, daß sich zwischen den Leitbahnen der verschiedenen Ebenen eine Kapazität ausbildet. Zwischen den Leitbahnebenen befindet sich ein isolierendes Dielektrikum, dessen Dicke und relative Dielektrizitätskonstante dem Einsatzzweck und dem zu erreichenden Kapazitätsbereich angepaßt ist. Jeder Leitbahnebene kann eine separate digitale Ansteuerelektronik zugeordnet sein. Die Ansteuerelektronik besteht im Wesentlichen aus Schaltelementen, insbesondere Auswahltransistoren. Die Leitbahnen einer Leitbahnebene können über die der Leitbahnebene zugeordnete digitale Ansteuerelektronik unabhängig voneinander an eine Elektrode zusammenschaltbar sein. Die Zahl der Elektroden ist dabei genauso groß wie die Zahl der Leitbahnebenen. Die Anzahl der gleichzeitig an eine Elektrode angeschlossenen Leitbahnen wird durch die Ansteuerung der Schaltelemente mittels einer Auswahlelektronik bestimmt. Dadurch ergibt sich eine hohe Anzahl unterschiedlicher Anschlußmöglichkeiten. Mindestens zwei Leitbahnen, die sich auf unterschiedlichen Leitbahnebenen befinden, werden mittels der jeweiligen Ansteuerelektronik mit den entsprechenden Elektroden verbunden. An den Elektroden steht die gewählte Kapazität zur Verfügung. In den Leitbahnebenen können im Minimalfall dadurch je eine oder im Maximalfall alle Leitbahnen gleichzeitig angeschlossen werden. Damit ergibt sich in Abhängigkeit der Anzahl der Leitbahnen je Ebene eine sehr große Variantenvielfalt. Jeder Kombination ist ein bestimmter Kapazitätswert zugeordnet. Damit ist eine digital ansteuerbare und aufgrund der sehr großen Kombinationsmöglichkeiten des Anschlusses der einzelnen Leitbahnen in den verschiedenen Leitbahnebenen veränderbare Kapazität realisiert. Die Differenz zwischen benachbarten Kapazitäten verringert sich mit Erhöhung der Zahl der Kombinationsmöglichkeiten, so daß bei sehr vielen Kombinationsmöglichkeiten eine quasi durchstimmbare Kapazität realisiert wird. Die Auflösung, d.h. die Feinheit der Durchstimmbarkeit, ist durch die geometrischen Formen und Abmessungen sowie durch die Anzahl der Leitbahnen pro Ebene einstellbar. So ergeben sich beispielsweise bei zehn separat ansteuerbaren Leitbahnen pro Leitbahnebene bei zwei Leitbahnebenen 1.046.529 Kapazitätswerte. Gegenüber dem Stand der Technik wird dadurch die Zahl der unterschiedlich einstellbaren Kapazitäten um mehrere Größenordnungen erhöht. Dies führt je nach Einsatzzweck und dementsprechender Ausführung der Erfindung zu einem weit größeren Bereich bzw. die Abstufung sind um ein Vielfaches feiner als im Stand der Technik.
Weiterer Vorteil der erfindungsgemäßen Lösung besteht darin, daß bei gleicher kapazitiver Auflösung eine wesentliche Verringerung des Flächenbedarfs erreicht wird.

Mögliche weitere Aufbauvarianten bestehen in der Verwendung von in der Halbleiterherstellung üblichen Mehrebenenmetallisierungen sowie unter Verwendung einer hochdotierten Halbleiterelektrode in einem Substrat eines einkristallinen Halbleiters, wobei auf das hochdotierte Halbleitersubstrat eine dünne Schicht eines Dielektrikums abgeschieden oder aufgewachsen wird und anschließend eine Gegenelektrode, insbesondere aus einem Metall oder polykristallinem Silizium, mittels Aufwachsen oder Abscheiden aufgesetzt wird.
Bei Verwendung von Halbleitersubstraten liegt es im Bereich der Erfindung, die Leitbahnebenen, die Ansteuer- und Auswahlelektronik sowie die weitere Elektronik, für die erfindungsgemäße digital abstimmbare, elektronische Kapazität zur Anwendung kommt, sowohl auf demselben Halbleitersubstrat als auch getrennt voneinander anzuordnen. Durch die Nutzung beispielsweise eines bekannten fotolithografischen Schrittes beim Herstellungsprozeß kann die Dicke der isolierenden Schicht zwischen den verschiedenen Leitbahnebenen in den Bereichen der sich kreuzenden Leitbahnen durch einen zusätzlichen Ätzschritt reduziert werden. Damit wird eine Erhöhung der sich ergebenden Einzelkapazitäten, einschließlich ihrer Selektivität, erreicht.

Bei der Velwendung als diskretes Bauelement sind auf einem Halbleiterchip die Leitbahnebenen sowie die Ansteuerelektronik untergebracht. Eine weitere Variante besteht darin, die kapazitätsbildenden Leitbahnen separat auf einem beliebigen isolierenden Substrat wie beispielsweise Glas aufzubringen und die Ansteuerelektronik auf einem anderen Chip zu realisieren.

Die Merkmale der Erfindung gehen außer aus den Ansprüchen auch aus der Beschreibung und den Zeichnungen hervor. Ein Ausführungsbeispiel der Erfindung ist in den Zeichnungen dargestellt und wird im folgenden näher erläutert. In den Zeichnungen zeigen:
- Fig. 1: schematischer Aufbau einer digital abstimmbaren, elektronischen Kapazität
- Fig. 2: schematische Schnittdarstellung der Leitbahnebenen

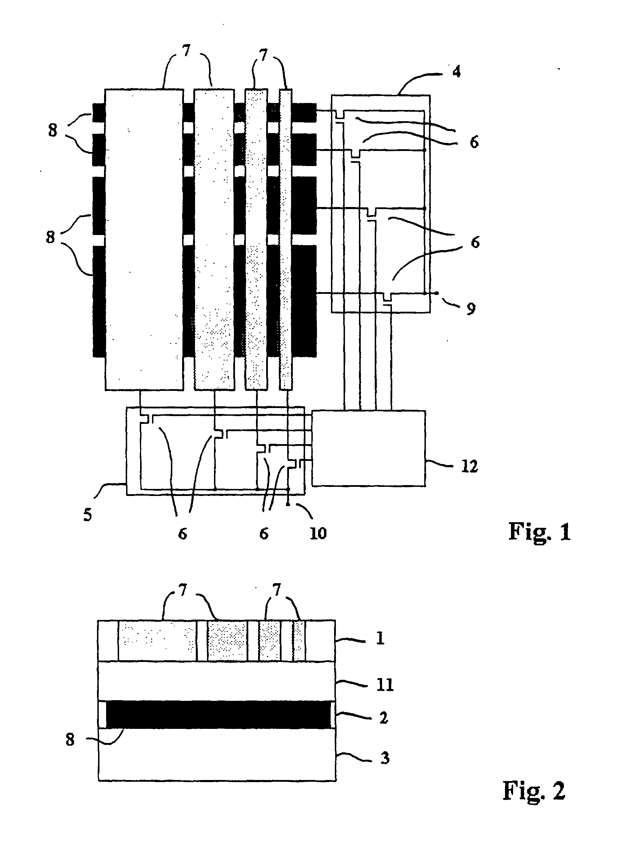

In Fig. **1** ist schematisch der Aufbau einer digital abstimmbaren, elektronischen Kapazität dargestellt. Fig. **2** zeigt einen schematischen Schnitt durch die. Leitbahnebenen der erfindungsgemäßen elektronischen Kapazität. Die elektronische Kapazität besteht aus einer Leitbahnebene **1** und einer weiteren Leitbahnebene **2,** die auf einem Substrat **3** angeordnet sind. Des weiteren besteht erfindungsgemäße Kapazität aus einer Ansteuerelektronik **4,** die der Leitbahnebene **1** zugeordnet ist, sowie einer weiteren Ansteuerelektronik **5**, die der Leitbahnebene **2** zugeordnet ist. Die Ansteuerelektroniken **4, 5** bestehen im wesentlichen aus Schalttransistoren **6.** Die Leitbahnebenen bestehen aus voneinander isolierten Leitbahnen **7, 8.**

Die vier rechteckförmigen Leitbahnen **7** der Leitbahnebene **1** sind in einem Winkel von 90° zu den vier rechteckförmigen Leitbahnen **8** der Leitbahnebene **2** angeordnet. Die Leitbahnen **7** der Leitbahnebene **1** sind durch die Ansteuerelektronik **4** unabhängig voneinander mit einer Elektrode **9** mittels der Auswahlelektronik **12** verbindbar. Die Leitbahnen **8** der Leitbahnebene **2** sind durch die Ansteuerelektronik **5** unabhängig voneinander mit einer Elektrode **10** mittels der Auswahlelektronik **12** verbindbar. Die Anzahl der gleichzeitig an eine Elektrode **9, 10** angeschlossenen Leitbahnen **7, 8** wird durch die Ansteuerung der Schalttransistoren **6** der Ansteuerelektroniken **4, 5** mittels der Auswahlelektronik **12** bestimmt.
Zwischen den Leitbahnebenen **1, 2** befindet sich ein isolierendes Dielektrikum **11** mit in diesem Beispiel konstanter Dicke und konstanter relativer Dielektrizitätskonstante. Die Größen der Leitbahnen **7, 8** sind so gewählt, daß alle möglichen 225 Kombinationen zu unterschiedlichen Kapazitäten führen.

In der vorliegenden Erfindung wurde anhand eines konkreten Ausführungsbeispiels eine digital abstimmbare, elektronische Kapazität erläutert. Es sei aber vermerkt, daß die vorliegende Erfindung nicht auf, die Einzelheiten der Beschreibung im Ausführungsbeispiel eingeschränkt ist, da im Rahmen der Patentansprüche Änderungen und Abwandlungen beansprucht werden.

## Patentansprüche

1. Digital abstimmbare, elektronische Kapazität, bestehend aus zwei Leitbahnebenen **(1**, **2)**, die zur Ausbildung einer Kapazität durch ein isolierendes Dielektrikum **(11)** getrennt sind und von denen die eine Leitbahnebene **(2)** zueinander isolierte Leitbahnen **(8)** aufweist und aus einer Schaltelemente enthaltenden Ansteuerelektronik **(4)**, die die Leitbahnen **(8)** der Leitbahnebene **(2)** unabhängig voneinander an eine Elektrode zusammenschaltbar macht und die Anzahl der gleichzeitig an die Elektrode angeschlossenen Leitbahnen **(7, 8)** durch Ansteuerung der Schaltelemente mittels einer Auswahlelektronik **(12)** bestimmbar ist **dadurch gekennzeichnet, daß** mindestens zwei Leitbahnebenen **(1, 2)** zueinander isolierte Leitbahnen **(7, 8)** aufweisen, jeder Leitbahnebene **(1, 2)** eine Schaltelemente enthaltende Ansteuerelektronik **(5, 4)** und eine Elektrode **(9,10)** zugeordnet sind und daß die Leitbahnen **(7, 8)** von mindestens zwei Leitbahnebenen **(1, 2)** um einen bestimmten Winkel, vorzugsweise um 90°, gegeneinander gedreht angeordnet sind.

2. Kapazität nach Anspruch 1, **dadurch gekennzeichnet, daß** jeder Leitbahnebene **(1, 2)** eine separate digitale Ansteuerelektronik **(4, 5)** zugeordnet ist.

3. Kapazität nach einem oder mehreren der vorhergehenden Ansprüche, **dadurch gekennzeichnet, daß** die Leitbahnen **(7, 8)** innerhalb der jeweiligen Leitbahnebene **(1**, **2)** gleiche oder unterschiedliche Abstände aufweisen.

4. Kapazität nach einem oder mehreren der vorhergehenden Ansprüche, **dadurch gekennzeichnet, daß** die Leitbahnen **(7, 8)** innerhalb der jeweiligen Leitbahnebene **(1, 2)** gleiche oder unterschiedliche Längen aufweisen.

5. Kapazität nach einem oder mehreren der vorhergehenden Ansprüche, **dadurch gekennzeichnet, daß** die Leitbahnen **(7, 8)** innerhalb der jeweiligen Leitbahnebene **(1, 2)** gleiche oder unterschiedliche Breiten aufweisen.

6. Kapazität nach einem oder mehreren der vorhergehenden Ansprüche, **dadurch gekennzeichnet, daß** die Form der Leitbahnen **(7, 8)** die Gestalt von geometrischen Figuren, vorzugsweise Rechtecken besitzen.

7. *Kapazität nach einem oder mehreren der vorhergehenden Ansprüche,* ***dadurch gekenn*zeichnet, daß** die Dicke und relative Dielektrizitätskonstante des isolierenden Dielektrikums **(11)** zwischen den Leitbahnebenen **(1, 2)** dem Einsatzzweck und dem zu erreichenden Kapazitätsbereich angepaßt sind.

8. Kapazität nach einem oder mehreren der vorhergehenden Ansprüche, **dadurch gekennzeichnet, daß** die Schaltelemente der Ansteuerelektronik Schalttransistoren **(6)** sind.

9. Kapazität nach einem oder mehreren der vorhergehenden Ansprüche, **dadurch gekennzeichnet, daß** über die Auswahlelektronik **(4, 5)** je Leitbahnebene **(1, 2)** auswählbar ist, welche Leitbahnen **(7, 8)** zur Kapazitätsnutzung herangezogen werden.

10. Kapazität nach einem oder mehreren der vorhergenehden Ansprüche, **dadurch gekennzeichnet, daß** die Dimensionen der Leitbahnen **(7, 8)** so gewählt sind, daß alle möglichen Kombinationen zur Kapazitätsbildung genutzt werden.

11. Kapazität nach einem oder mehreren der vorhergehenden Ansprüche, **dadurch gekennzeichnet, daß** die Leitbahnebenen **(1, 2),** die Ansteuerelektronik **(4, 5)** und die Auswahlelektronik **(12)** sowie die weitere Elektronik, für die die digital abstimmbare, elektronische Kapazität zur Anwendung kommt, auf demselben Substrat **(3)** angeordnet sind.

12. Kapazität nach einem oder mehreren der vorhergehenden Ansprüche, **dadurch gekennzeichnet, daß** die Leitbahnebenen **(1, 2)**, die Ansteuerelektronik (4, 5) und die Auswahlelektronik **(12)** sowie die weitere Elektronik, für die die digital abstimmbare, elektronische Kapazität zur Anwendung kommt, getrennt voneinander angeordnet sind.

13. Kapazität nach einem oder mehreren der vorhergehenden Ansprüche, **dadurch gekennzeichnet, daß** auf einem Halbleiterchip die Leitbahnebenen **(1, 2)** und die Ansteuerelektronik **(4, 5)** untergebracht sind.

## Claims

1. A digitally tunable electronic capacitor comprising two conductor track planes (1, 2) which are separated by an insulating dielectric (11) to provide a capacitor and of which the one conductor track plane (2) has mutually insulated conductor tracks (8) and an electronic control arrangement (4) which includes switching elements and which makes the conductor tracks (8) of the conductor track plane (2) connectable to an electrode independently of each other and the number of conductor tracks (7, 8) simultaneously connected to the electrode can be determined by controlling the switching elements by means of an electronic selection arrangement (12), **characterised in that** at least two conductor track planes (1, 2) have mutually insulated conductor tracks (7, 8), an electronic control arrangement (4, 5) including switching elements and an electrode (9, 10) are associated with each conductor track plane (1, 2) and that the conductor tracks (7, 8) of at least two conductor track planes (1, 2) are arranged rotated relative to each other through a given angle, preferably 90°.

2. A capacitor according to claim 1 **characterised in that** associated with each conductor track plane (1, 2) is a separate digital electronic control arrangement (4, 5).

3. A capacitor according to one or more of the preceding claims **characterised in that** the conductor tracks (7, 8) involve identical or different spacings within the respective conductor track plane (1, 2).

4. A capacitor according to one or more of the preceding claims **characterised in that** the conductor tracks (7, 8) are of identical or different lengths within the respective conductor track plane (1, 2).

5. A capacitor according to one or more of the preceding claims **characterised in that** the conductor tracks (7, 8) are of identical or different widths within the respective conductor track plane (1, 2).

6. A capacitor according to one or more of the preceding claims **characterised in that** the shape of the conductor tracks (7, 8) are in the configuration of geometrical figures, preferably rectangles.

7. A capacitor according to one or more of the preceding claims **characterised in that** the thickness and relative dielectric constant of the insulating dielectric (11) between the conductor track planes (1, 2) are adapted to the purpose of use and the capacitor range to be attained.

8. A capacitor according to one or more of the preceding claims **characterised in that** the switching elements of the electronic control arrangement are switching transistors (6).

9. A capacitor according to one or more of the preceding claims **characterised in that** by way of the electronic selection arrangement (4, 5) it is possible to select for each conductor track plane (1, 2) which conductor tracks (7, 8) are brought into operation for capacitor use.

10. A capacitor according to one or more of the preceding claims **characterised in that** the dimensions of the conductor tracks (7, 8) are so selected that all possible combinations are used for capacitor formation.

11. A capacitor according to one or more of the preceding claims **characterised in that** the conductor track planes (1, 2), the electronic control arrangement (4, 5) and the electronic selection arrangement (12) as well as the further electronics for which the digitally tunable electronic capacitor is used are arranged on the same substrate (3).

12. A capacitor according to one or more of the preceding claims **characterised in that** the conductor track planes (1, 2), the electronic control arrangement (4, 5) and the electronic selection arrangement (12) as well as the further electronics for which the digitally tunable electronic capacitor is used are arranged separately from each other.

13. A capacitor according to one or more of the preceding claims **characterised in that** the conductor track planes (1, 2) and the electronic control arrangement (4, 5) are disposed on a semiconductor chip.

## Revendications

1. Capacité électronique réglable numériquement, se composant de deux plans de pistes conductrices (1, 2) qui sont séparés en vue de la formation d'une capacité par un diélectrique isolant (11) et dont le plan de pistes conductrices (2) présente des pistes conductrices (8) isolées l'une de l'autre et d'une électronique de commande (4) contenant des éléments de commutation, pouvant connecter les pistes conductrices (8) du plan de pistes conductrices (2) indépendamment l'une de l'autre à une électrode et le nombre des pistes conductrices (7, 8) reliées simultanément à l'électrode est réglable par commande des éléments de commutation au moyen d'une électronique de sélection (12).

2. Capacité selon la revendication 1, **caractérisée en ce qu'**à chaque plan de pistes conductrices (1, 2) est associée une électronique de commande numérique distincte (4, 5).

3. Capacité selon l'une ou plusieurs des revendications précédentes, **caractérisée en ce que** les pistes conductrices (7, 8) présentent à l'intérieur du plan de piste conductrice respectif (1, 2) des écartements identiques ou différents.

4. Capacité selon l'une ou plusieurs des revendications précédentes, **caractérisée en ce que** les pistes conductrices (7, 8) à l'intérieur des plans de pistes conductrices respectifs (1, 2) présentent des longueurs identiques ou différentes.

5. Capacité selon l'une ou plusieurs des revendications précédentes, **caractérisée en ce que** les pistes conductrices (7, 8) à l'intérieur des plans de pistes conductrices respectifs (1, 2) présentent des largeurs identiques ou différentes.

6. Capacité selon une ou plusieurs des revendications précédentes, **caractérisée en ce que** les pistes conductrices (7, 8) possèdent la forme de figures géométriques, de préférence des angles droits.

7. Capacité selon une ou plusieurs des revendications précédentes, **caractérisée en ce que** l'épaisseur et la constante diélectrique relative du diélectrique isolant (11) entre les plans de pistes conductrices (1, 2) sont adaptées à l'application et à la plage de capacité à atteindre.

8. Capacité selon une ou plusieurs des revendications précédentes, **caractérisée en ce que** les éléments de commutation de l'électronique de commande sont des transistors de commutation (6).

9. Capacité selon une ou plusieurs des revendications précédentes, **caractérisée en ce que**, par l'intermédiaire de l'électronique de sélection (4, 5), chaque plan de piste conductrice (1, 2) peut être sélectionné, les pistes conductrices (7, 8) étant utilisées en vue de la formation de la capacité.

10. Capacité selon une ou plusieurs des revendications précédentes, **caractérisée en ce que** les dimensions des pistes conductrices (7, 8) sont choisies de sorte que toutes les combinaisons possibles sont utilisées en vue de la formation de la capacité.

11. Capacité selon une ou plusieurs des revendications précédentes, **caractérisée en ce que** les plans de pistes conductrices (1, 2), l'électronique de commande (4, 5) et l'électronique de sélection (12), ainsi que l'autre électronique qui est utilisée pour la capacité électronique réglable numériquement, sont disposées sur le même substrat (3).

12. Capacité selon une ou plusieurs des revendications précédentes, **caractérisée en ce que** les plans de pistes conductrices (1, 2), l'électronique de commande (4, 5) et l'électronique de sélection (12) ainsi que l'autre électronique qui est utilisée pour la capacité électronique réglable numériquement, sont séparées les unes des autres.

13. Capacité selon une ou plusieurs des revendications précédentes, **caractérisée en ce que** les plans de pistes conductrices (1, 2) et l'électronique de commande (4, 5) sont disposées sur une puce semiconductrice.
